# EUROPÄISCHE PATENTSCHRIFT

(11) **EP 1 563 467 B1**
(45) Veröffentlichungstag und Bekanntmachung des Hinweises auf die Patenterteilung: **05.07.2006**
(21) Anmeldenummer: 03767619.4
(22) Anmeldetag: 22.11.2003
(51) Int. Cl.: G07D 5/00, G02B 21/00

(54) **VERFAHREN ZUR FOTOGRAFISCHEN AUFNAHME EINES ZYLINDERFÖRMIGEN, INSBESONDERE PLATTENFÖRMIGEN GEGENSTANDES**
METHOD FOR PHOTOGRAPHICALLY RECORDING A CYLINDRICAL, ESPECIALLY PLATE-SHAPED, OBJECT
PROCEDE D'ENREGISTREMENT PHOTOGRAPHIQUE D'UN OBJET CYLINDRIQUE, NOTAMMENT EN FORME DE DISQUE

(30) Priorität: 23.11.2002 DE 10254883; 23.12.2002 DE 10261502
(43) Veröffentlichungstag der Anmeldung: 17.08.2005
(73) Patentinhaber: National Rejectors, Inc. GmbH, 21614 Buxtehude (DE)
(72) Erfinder: SCHRÖTER, Michael, 42899 Remscheid-Lüttringhausen (DE); PFINGSTEN, Dieter, 42897 Remscheid-Lennep (DE)
(74) Vertreter: Schildberg, Peter
(86) Internationale Anmeldenummer: PCT/EP2003/013156
(87) Internationale Veröffentlichungsnummer: WO 2004/049267

(56) Entgegenhaltungen:
- EP-A- 0 798 670
- EP-A- 1 136 957
- WO-A-02/089071
- US-A- 5 450 291
- PATENT ABSTRACTS OF JAPAN vol. 1998, no. 05, 30. April 1998 (1998-04-30) & JP 10 011629 A (TOSHIBA CORP), 16. Januar 1998 (1998-01-16)

## Beschreibung

Die Erfindung betrifft ein Verfahren zur fotografische Aufnahme eines zylinderförmigen, insbesondere plattenförmigen Gegenstandes nach dem Oberbegriff des Anspruch 1. Derartige Verfahren wie in EP 0 798 670 und in WO 02089071 beschrieben werden insbesondere angewandt zur Qualitätsprüfung von Gegenständen, Werkstücken, Münzen und dergleichen.

Es kann sich auch um Gegenstände handeln, die auf einem anderen Gegenstand als zylindrische Erhebungen angebracht sind, wie z. B. Vorsprünge, Nasen, Beschriftungen, Zahlen oder sonstige Zeichen und Bilder, wie sie z.B. auf Münzen zu finden sind.

Mit den bekannten Verfahren kann die Stirnfläche fotografisch aufgenommen und auf Qualitätsmängel überprüft werden. Es gibt jedoch keine geeigneten Verfahren auch eine fotografische Aufnahme der Mantelfläche des Gegenstandes oder der reliefartigen Erhebungen auf einer ebenen Fläche herzustellen, wenn man von der wenig praxisgerechten Möglichkeit absieht, mehrere Kameras am Umfang des Gegenstandes anzuordnen und auf die Mantelfläche zu richten oder den

Gegenstand vor der Kamera einmal um 360 ° zu drehen und dabei mehrfach fotografisch aufzunehmen.

Aufgabe der Erfindung ist ein fotografisches Verfahren zur Qualitätskontrolle oder Identfizierung von derartigen Gegenständen zu schaffen, bei welchem in einem Arbeitsgang eine fotografische Aufnahme der Stirnfläche und gleichzeitig der Mantelfläche erfolgt.

Die Lösung ergibt sich aus Anspruch 1.

Der Vorteil dieser Lösung besteht darin,
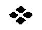 dass nur eine Kamera erforderlich ist,
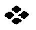 dass der Gegenstand relativ zu der Aufnahmekamera bewegt, also gefördert werden kann,
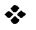 dass daher eine Vielzahl von Gegenständen am laufenden Band geprüft werden können,
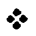 dass die Gegenstände von oben und von unten aufgenommen werden können. Dabei ist es ein weiteres Ziel, das Verfahren so auszugestalten,
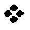 dass die Handhabung des zu prüfenden Gegenstandes auf eine einfache translatorische Förderung beschränkt ist und keiner weiteren Aufnahmevorrichtung für den Gegenstand bedarf.

Die hierfür geeignete Ausgestaltung ergibt sich aus Anspruch 2. Hierbei kann die gesamte erforderliche Optik in die Kamera integriert werden, so dass der

Gegenstand und die Kamera relativ zueinander frei beweglich sind. Diese Ausführung ist insbesondere bei der Werkstückprüfung von Massenartikeln vorteilhaft, wenn eine 100%-Kontrolle durchgeführt werden soll.

Ein vereinfachtes Linsensystem ergibt sich aus der Ausführung nach Anspruch 7. Diese Ausführung eignet sich insbesondere für Einzeluntersuchungen von kreiszylindrischen Gegenständen wie z. B. Sammlermünzen.

Bei dem Verfahren ist ein besonderes Augenmerk auf die Ausleuchtung des Gegenstandes zu richten. Dabei erfolgt die Ausleuchtung der Stirnfläche mit konventionellen Mitteln, indem Lichtquellen blendfrei gegenüber der Kamera, aber auch ohne Schattenwurf auf die Stirnfläche angeordnet sind. Eine vorteilhafte Ausleuchtung der Mantelfläche - und bei geeigneter Ausführung auch der Stirnfläche - ergibt sich aus Anspruch 3 und Anspruch 4. Insoweit lässt sich auch die Ausleuchtung der Stirnfläche blendfrei und schattenwurffrei erreichen.

Es ist sehr häufig auch von Interesse, einen zylinderförmigen oder plattenförmigen Gegenstand auch von unten fotografisch aufzunehmen. Hierzu eignet sich die Weiterbildung nach Anspruch 5, 18 und 19. Der besondere Vorteil dieser Weiterbildung besteht darin, dass gleichzeitig eine Aufnahme von oben und von unten möglich ist und dass dabei die Mantelflächen auch zweimal aufgenommen und beide Aufnahmen wiederum miteinander verglichen werden können um Fehler aufzuspüren. Es können mehrere torus - schalenförmige Spiegel konzentrisch in einander angeordnet werden. Auf diese Weise kann die gesamte Unterseite des Gegenstandes von oben mit der Kamera erfaßt werden.

Da die fotografische Aufnahme in einem Arbeitsschritt erfolgt, eignet sie sich insbesondere für die Qualitätsprüfung einer Vielzahl von gleichen Gegenständen in der Weiterbildung nach Anspruch 6

Die Münzprüfung bei der Herstellung von Münzen sowie die Wiedererkennung von Münzen in Warenautomaten, Münzwechselautomaten, Münzzählautomaten und dergleichen. Hier ist eine bevorzugte Anwendung der erfindungsgemäßen Verfahren.

Bei der Herstellung von Tabletten ist es wichtig, dass die Wirkstoffe in einer bestimmten Quantität enthalten sind. Dies ist zum einen ein Problem der Tablettenherstellung, zum anderen aber auch ein bei der Verpackung auftretendes Problem, da verhindert werden muss, dass Tabletten, die durch Beschädigungen oder Fehlproduktion eine zu geringe Menge aufweisen, verpackt werden. Daher wird das Verfahren mit Vorteil auch bei der Qualitätsprüfung von Tabletten angewandt und zwar vor der Verpackung (Anspruch 9) oder nach der Verpackung (Anspruch 10).

Die Qualitätsprüfung kann insbesondere dann erfolgen, wenn die fotografische Aufnahme mit einer digitalen Kamera, CCD-Kamera, erfolgt (Anspruch 11). Der hierdurch ermöglichte Bildvergleich nach Anspruch 12 ermöglicht es, die Qualität der durchlaufenden Gegenstände mit der Qualität eines Referenzgegenstandes, dessen Stirnfläche und Mantelfläche zuvor aufgenommen wurde zu vergleichen (Anspruch 12). Dabei ergibt sich nicht nur die Möglichkeit, das auf der Stirnfläche eingeprägte Bild zu erfassen. Vielmehr können auch die Ränder der Stirnfläche und der Mantelfläche erfasst und damit Länge und Breite bzw. Durchmesser der Stirnfläche sowie die Dicke des Gegenstandes bzw. Höhe des Randes erfasst werden. Als geeignetes Vergleichskriterium ergibt sich dabei insbesondere die Helligkeit der aufgenommenen Bildpunkte.

Je nach Höhe der Auflösung sind für den Datenvergleich sehr große Datenmengen miteinander zu vergleichen um Bildübereinstimmungen bzw. Nicht-Übereinstimmungen festzustellen. Eine Reduzierung der Datenmengen und damit eine Beschleunigung des in einem Rechner durchzuführenden Vergleichsverfahren ergibt sich in der Ausführung nach Anspruch 11 bzw. 12.

Im folgenden wird die Erfindung anhand von Ausführungsbeispielen beschieben.

Es zeigen:

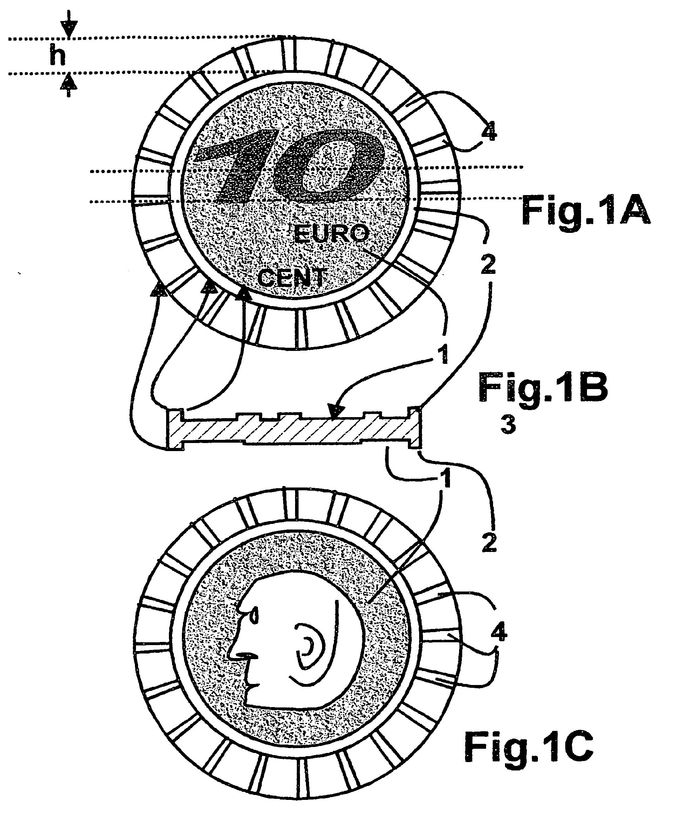

Figur 1A Die Ansicht einer Münze
Figur 1B: Den Querschnitt durch die Münze entlang der Linie I
Figur 1B: Die Untersicht einer Münze
Figur 2: Den Querschnitt durch eine Vorrichtung zur Ausführung des Verfahrens
Figur 3A, 3B. 3C: Ausführungsformen für Leuchtringe zur Ausleuchtung des Randes.

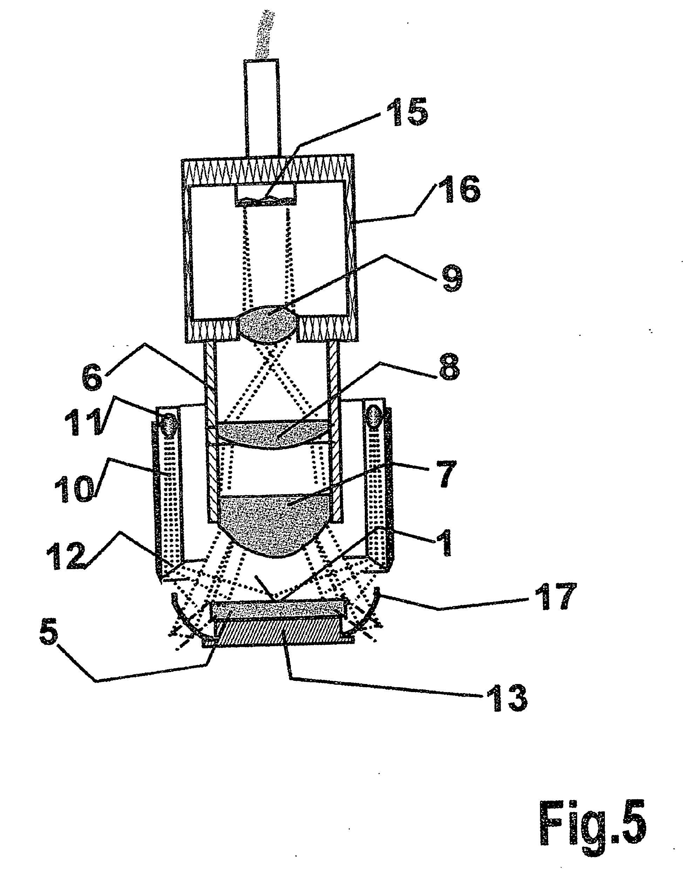

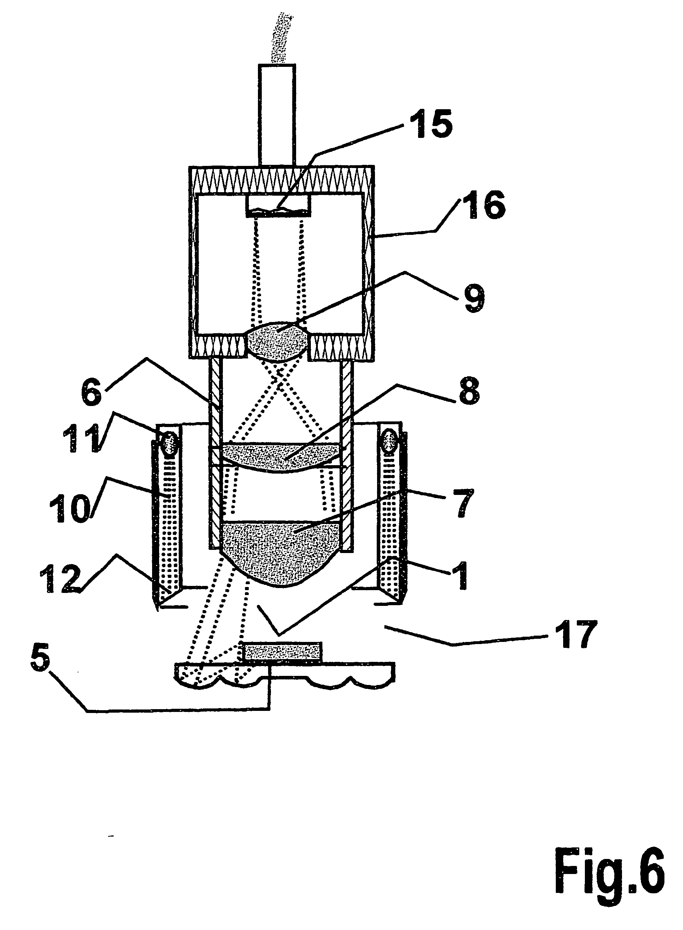

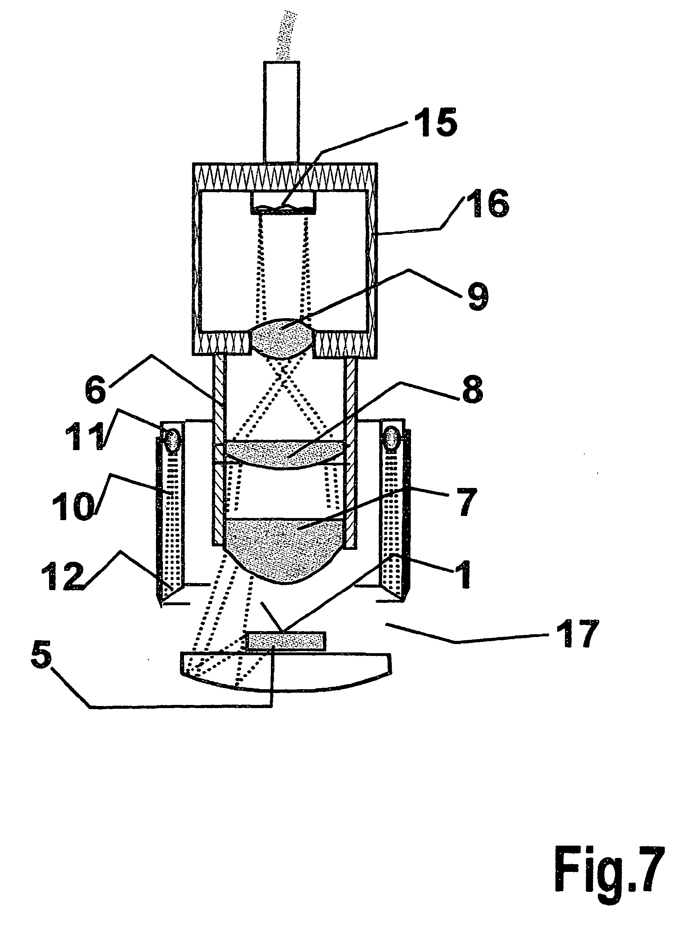

Figur 4 bis 7: Den Querschnitt durch eine Vorrichtung zur Ausführung des Verfahrens mit einer Spiegelfläche

Bildlich dargestellt werden soll eine Münze wie sie schematisch in Figur 1A, 1B, 1C dargestellt ist. Die Münze besitzt eine obere Sichtfläche 1, auf der insbesondere der Wert der Münze dargestellt ist, und eine untere Sichtseite 1, woein Symbol, Hoheitszeichen oder dergleichen dargestellt ist Die Sichtflächen 1 werden von einem Rand 2 umgeben, der über die Sichtfläche 1 hinausragt. Die Münze ist als kreiszylindrischer Körper ausgebildet und besitzt daher eine Mantelfläche 3, deren Gestaltung für die Münze typisch ist. Dadurch wird erreicht, dass die Münzen auch für Blinde erkennbar sind.

Im dargestellten Fall besitzt die Münze eine Riffelung in Form von Nuten 4, die mit einer bestimmten Frequenz auf dem Umfang angeordnet sind.

Die Unterseite der Münze, in dieser Anmeldung als zweite Sichtfläche bezeichnet, ist anders gestaltet. Jedoch ist sie ebenfalls für den Wert der Münze typisch gestaltet und weist ebenfalls einen Rand 2 auf.

Bei der Prüfung von Münzen kommen insbesondere folgende Aufgabenstellungen vor:
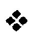 Zum einen soll beim Prägen der Münzen oder der späteren Überprüfung eine vollständige Qualitätskontrolle darauf hin erfolgen, ob beide Sichtseiten, einschl. Rand sowie die Mantelflächen und auch die Ausrichtung der bildlichen Darstellungen auf der Oberseite und der Unterseite der Norm entsprechen. Dabei ist zu bemerken, dass zwischen der Ausrichtung des Bildes auf der Oberseite und der Ausrichtung des Bildes auf der Unterseite ein bestimmter Versatz bestehen muss, der ein Merkmal für den Wert und die Echtheit der Münze ist. Die fotografische Darstellung der Münze nach dieser Erfindung, wie sie in den Figuren 1A, 1B und 1C angedeutet ist, erlaubt alle diese Prüfungen durch entsprechende Auswertung der beiden aufgenommenen Bilder. Dabei ist insbesondere auch die Dickenprüfung möglich, indem die Breite h, in der sich der Rand darstellt, in Beziehung gesetzt wird zu dem entsprechenden Maß, mit dem sich eine Mustermünze in dem selben Verfahren darstellt.
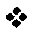 Eine andere Aufgabe bei der Münzprüfung besteht darin, den Wert der Münzen und ihre Echtheit zu erkennen. Diese Aufgabe stellt sich insbesondere in Warenautomaten und Zählautomaten. Dabei kommt es nicht darauf an, dass sämtliche Eigenschaften überprüft werden, da hierbei stets mit Abnutzung und geringeren Beschädigungen der Münzen gerechnet werden muss. Auch diese Aufgabe vermag die bildliche Darstellung nach dieser Erfindung zu leisten. Gerade bei dieser Aufgabenstellung ist eine hohe Geschwindigkeit erforderlich. Daher genügt es, dass nur ein Teil der aufgenommenen Bildpunkte ausgewertet wird. Es ist beispielsweise möglich, dass nur die Bildpunkte auf einem engen Band von wenigen mm Breite aufgenommen werden, wobei dieses Band durch den Durchmesser geht oder durch zwei Sehnen begrenzt wird.

In jedem Falle erfolgt die Auswertung dadurch, dass zuvor die Bildpunkte einer Mustermünze aufgenommen und gespeichert werden und dass sodann die Bildpunkte der zu prüfenden Münze auf Übereinstimmung mit den gespeicherten Bildpunkten überprüft wird. Als Kriterium der Prüfung kommt insbesondere die Helligkeit der aufgenommenen Bildpunkte in Betracht. Hierzu existieren geeignete Verfahren, wobei in dem Auswertung dienenden Rechner insbesondere die Helligkeitswerte in Stufen eingeteilt werden und die aufgenommenen Helligkeitswerte einer dieser Stufen zugeordnet und sinngemäß dargestellt werden.

Bei dieser Auswertung bietet die Sichtbarmachung der Mantelfläche nach dieser Erfindung den besonderen Vorteil, dass die Übereinstimmung der Sichtfläche mit der vorgeschriebenen Form des Randes ein treffsicheres Kriterium für den Wert und die Echtheit der Münze ist.

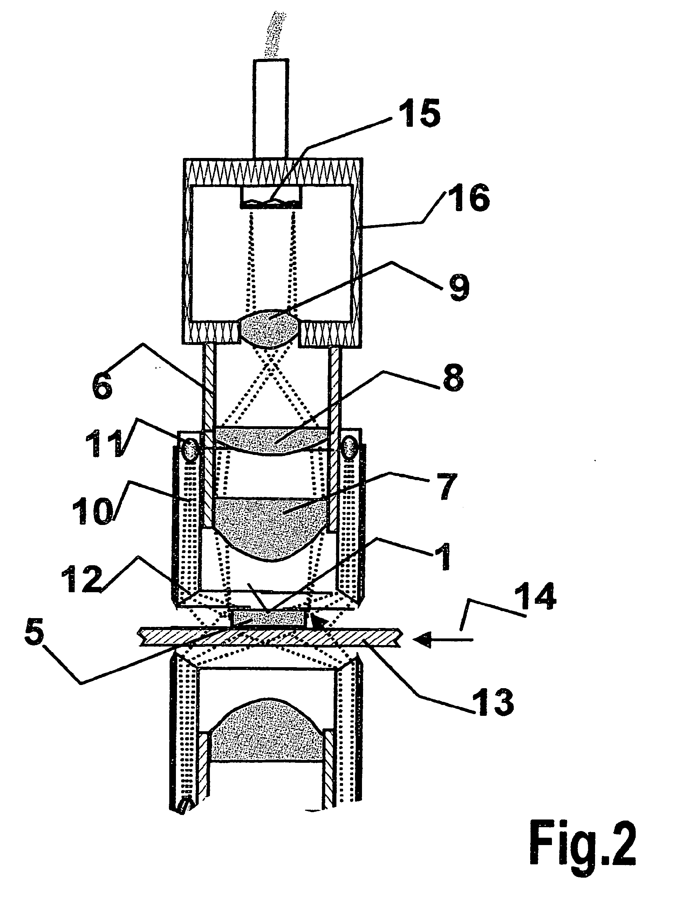

Die Vorrichtung zur fotografischen Aufnahme der Münze ist in Figur 2 dargestellt. Eine digitale Kamera 5 ist mit ihrem Linsensystem, bestehend aus den hintereinander geschalteten Objektiv 7, Sammellinse 8 und Okular 9 auf einen plattenförmigen Gegenstand 5, z.B. die zuvor besprochene Münze gerichtet. Das Linsensystem, insbesondere Objektiv 7 ist im Durchmesser größer als die größte Breite des Gegenstandes 5. Daher können mittels des Linsensystems auch die von der Mantelfläche 3 reflektierten Lichtstrahlen teilweise weitergeleitet werden. Der Strahlengang des Linsensystems ist so berechnet, dass auf den lichtempfindlichen Empfänger 15 der Kamera sich das Bild des Gegenstandes einschl. seiner Mantelfläche - wie in Figur 1 gezeigt - abbildet.

Zur gleichmäßigen Ausleuchtung insbesondere der Mantelfläche, aber auch der Sichtfläche 1 ist auf den Tubus 6 der Kamera, welcher das Linsensystem zumindest teilweise enthält, ein Leuchtring 10 gesetzt. Dieser Leuchtring ist hohlzylindrisch ausgebildet und besteht aus einem lichtdurchlässigen, durchsichtigen oder durchscheinigen Material, z. B. Glas oder Kunststoff. Auf der von dem zu fotografierenden Gegenstand abgewandten Stirnfläche des Leuchtrings 10 sind mehrere Lichtsender 11, z. B. LED (Licht sendende Dioden) vorzugsweise gleichmäßig verteilt. Durch die Verteilung kann die Ausleuchtung des Sichtfeldes bestimmt werden. Die Lichtstrahlen durchdringen den Leuchtring 10 in axialer Richtung, parallel zu dem Tubus 6 und treten an der gegenüberliegenden Stirnfläche 12 aus. Der Leuchtring ist im Bereich dieser Stirnfläche 12 so geformt, dass die Stirnfläche 12 auf die Mantelfläche 3 und vorzugsweise auch auf die Sichtfläche 1 des Gegenstandes 5 gerichtet ist. Daher bildet die Stirnfläche 12 eine kegelmantelförmige Ringfläche.

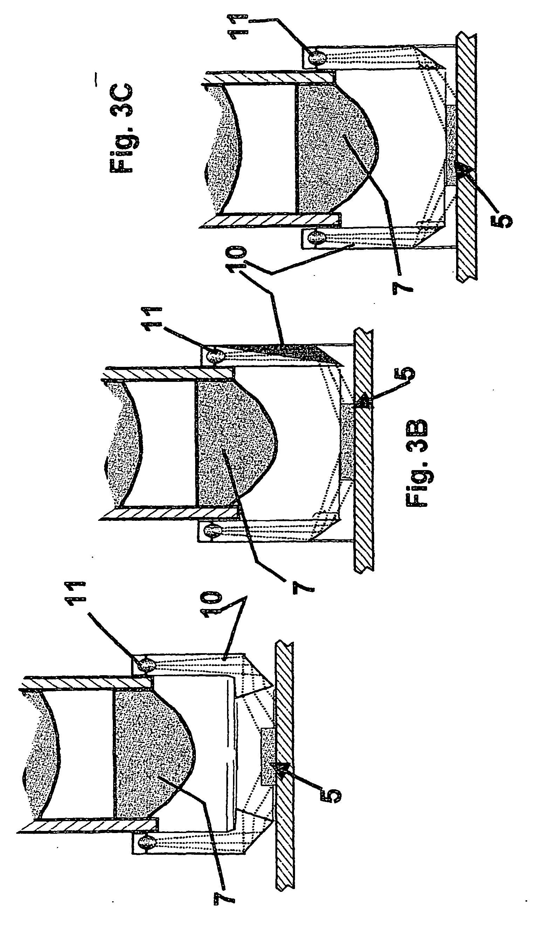

In Figur 3 sind spezifische Ausführungen von Leuchtringen dargestellt mit unterschiedlichen Strahlengängen. In jedem Fall ist der Strahlengang so ausgeführt, dass eine gute Ausleuchtung des Gegenstandes von der Seite und auf der Stirnfläche erfolgt. Es ist ersichtlich, dass kreisrunde Gegenstände auch eine kreisrunde Gestaltung der Austrittsfläche 12 erfordern. Wenn eckige Gegenstände geprüft werden sollen, so ist ggfl. eine andere Gestaltung und eine andere Verteilung der Lichtquellen 11 zur Erzielung einer optimalen Ausleuchtung erforderlich.

Der Gegenstand 5 kann für die fotografische Aufnahme auf einem undurchsichtigem Träger 13 gelagert werden. Dabei kann es sich z. B. um ein Förderband handeln, welches mit hoher Geschwindigkeit kontinuierlich bewegt wird und dabei eine Vielzahl von Gegenständen mit Förderrichtung 14 nach einander unter der Kamera hindurchfördert, so dass dabei jeder Gegenstand bei kurzer Belichtungszeit fotografisch erfasst werden kann.

Bei der Unterlage 13 kann es sich jedoch auch - wie in Figur 2 dargestellt - um eine Glasplatte handeln. Diese Glasplatte ermöglicht es, dass der Gegenstand 5 gleichzeitig von der Oberseite und der Unterseite fotografisch erfasst wird. Hierzu ist - wie in Figur 2 angedeutet - unterhalb des Trägers 13 eine Kamera mit Linsensystem und Ausleuchtung identisch wie auf der Oberseite angeordnet. Die beiden Kameras sind mit dem selben Rechner - hier nicht dargestellt - verbunden. Der Rechner besitzt Speicherplatz zur Speicherung der Helligkeitswerte der einzelnen Bildpunkte, welche durch die einzelnen Sensorelemente des Sensors 15 aufgenommen worden sind. Diese Helligkeitswerte werden in unterschiedliche Graustufen eingeordnet, welche sich von einander gut abheben. Die aufgenommenen Helligkeitswerte werden zur bildlichen Darstellung des Gegenstandes also in gestufte Helligkeitswerte umgewandelt, so dass sich die einzelnen Bildelemente gut gegeneinander abheben.

Ferner besitzt der Rechner Speicherraum, um die Musterbilder eines Mustergegenstandes oder mehrerer verschiedener Mustergegenstände zu speichern, die zuvor fotografisch erfasst worden sind und die die normgerechte Gestaltung aufwiesen. Durch Vergleich der Musterbilder mit den Prüfbildem bestimmt der Rechner zunächst die Drehlage der Prüflinge 5 und sodann die Übereinstimmungen bzw. Abweichungen der einzelnen Bildpunkte des jeweiligen Prüfbildes von den Bildpunkten der Musterbilder hinsichtlich der aufgenommenen und gespeicherten Heiligkeitsstufen. Durch die gleichzeitige Aufnahme der Oberseite und der Unterseite eines Prüflings und die Verarbeitung der Prüfbilder in einem gemeinsamen Rechner kann auch der Versatz der Abbildung auf der Oberseite und der Unterseite festgestellt und berechnet werden.

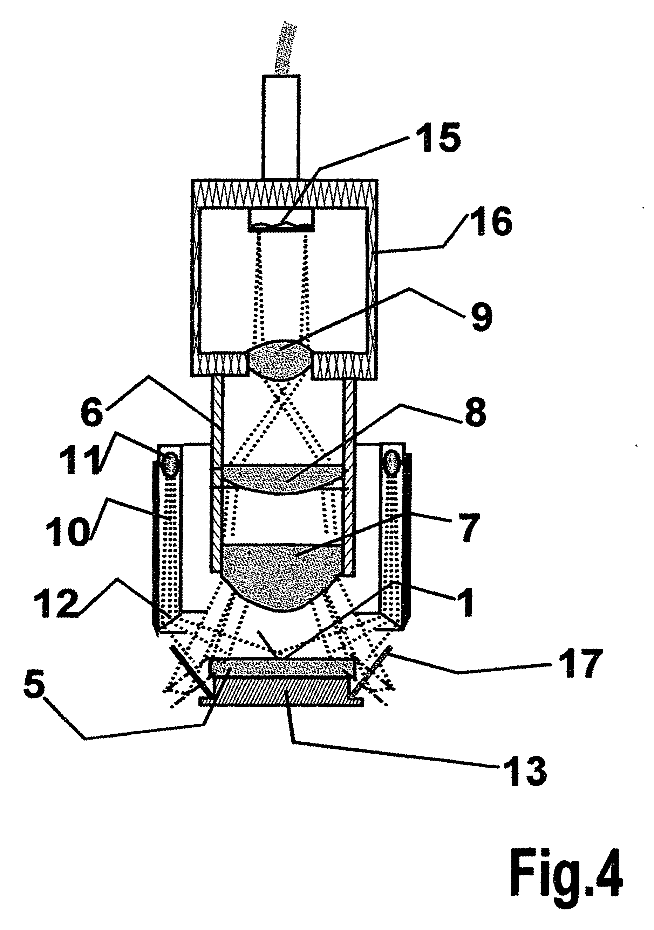

Fig. 4 zeigt eine Vorrichtung zur Ausführung des Verfahrens, bei welcher Linsensysteme verwandt werden können, welche im Durchmesser kleiner sind als die größte Erstreckung des Prüflings. Diese Vorrichtung eignet sich also insbesondere für Prüflinge, die größer sind als preiswerte Linsensysteme. Auf diese Vorrichtung trifft die Beschreibung dieser Erfindung zu mit der Ausnahme, daß der Strahlengang des Objektivs nicht direkt die reflektierten Strahlen der Mantelfläche sondern die Reflektion einer Spiegelfläche 17 erfaßt. Diese hat die Form des Innenfläche eines Kegelmantels, der auf seiner Achse den Gegenstand aufnimmt, so daß die Innenfläche auf die Mantelfläche des Gegenstandes gerichtet ist. Der Kegelwinkel beträgt dabei etwa 45°. Der Nachteil dieser Ausführung besteht darin, daß bei Prüfung einer Serie von Prüflingen die Förderung der Prüflinge nicht so einfach wie bei der zuvor deschilderten Vorrichtung ist.

Es wurde zuvor ausführlich die Untersuchung von Münzen beschrieben. Es können jedoch auch andere plattenförmige Gegenstände untersucht werden, die nicht notwendiger Weise kreisrund sein müssen. Wenn im Rahmen dieser Anmeldung von Abbildern und Sichtseiten die Rede ist, so ist damit auch die Anordnung von Löchern, Nuten und ähnliches gemeint, wie es bei technischen Gegenständen vorkommen kann. Die Besonderheiten des erfindungsgemäßen Verfahrens, die mit keinem anderen Verfahren erzielbar sind, bestehen vor allem darin,
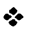 daß der Versatz der Sichtflächen zu der Gestaltung der Mantelfläche ermittelt werden kann,
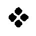 daß die Dicke des Gegenstandes ermittelt werden kann,
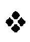 daß die Durchdringungskanten der Stirnflächen mit der Mantelfläche dargestellt werden; dadurch wird gerade hier eine sehr gute Überprüfungsmöglichkeit geschaffen, um Grate, Kerben, sonstige Fehlstellen der umlaufenden Kanten festzustellen;
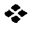 dass gleichzeitig mit der Oberseite auch der Mantel des Gegenstandes sichtbar gemacht werden kann und evtl. auch gleichzeitig die Unterseite mit dem Mantel aufgenommen werden kann. Dadurch lässt sich der Vlfinkelversatz zwischen Oberseite und Unterseite sowie der Winkelversatz der Stirnseiten gegenüber der Mantelfläche erfassen und überprüfen..

### Bezugszeichen

- 1.: obere Sichtfläche 1, untere Sichtseite 1
- 2.: Rand 2
- 3.: Mantelfläche 3
- 4.: Nuten 4
- 5.: plattenförmigen Gegenstand 5, Münze, Prüfling, Muster
- 6.: Tubus 6
- 7.: Objektiv 7
- 8.: Sammellinse 8
- 9.: Okular 9
- 10.: Leuchtring 10
- 11.: Lichtsender 11
- 12.: Stirnfläche gegenüberliegenden Stirnfläche 12, Austrittsfläche 12
- 13.: Unterlage 13 Glasplatte Förderband
- 14.: Förderrichtung 14
- 15.: lichtempfindlichen Empfänger 15
- 16.: digitale Kamera 16 Kamera 16
- 17.: Spiegel, Spiegelfläche

## Patentansprüche

1. Verfahren zur fotographischen Darstellung eines zylinderförmigen, insbesondere plattenförmigen Gegenstandes (5), welcher eine Stirnfläche (12) und eine Mantelfläche (3) besitzt, mittels einer auf die Stirnfläche (12) gerichteter Kamera (6), **gekennzeichnet durch**
Anwendung eines Linsensystems als Objektiv (7), in dessen Focus die Stirnfläche (12) im wesentlichen liegt und welches mit seinem Strahlengang so ausgelegt ist, dass die Mantelfläche (3) sich als Ringfläche abbildet, welche das Bild der Stirnfläche umgibt.

2. Verfahren nach Anspruch 1,
**dadurch gekennzeichnet, dass**
das Linsensystem in seinem Durchmesser die größtmögliche Breite des Werkstücks wesentlich überragt.

3. Verfahren nach Anspruch 1 oder 2
**gekennzeichnet durch**
die Ausleuchtung des Gegenstandes mittels eines Ringes aus durchsichtigem Material wie Glas oder Plexiglas, welcher den Gegenstand umgibt, welcher eine Lichteinleitung parallel zur Zylinderachse des Gegenstandes und einen zylindermantel-oder kegelmantelförmige Lichtaustrittsfläche hat, welche die Mantelfläche umgibt und im wesentlichen auf die Mantelfläche gerichtet ist.

4. Verfahren nach Anspruch 3
**dadurch gekennzeichnet, dass**
der Leuchtring (10) aus durchsichtigem oder durchscheinigem Material als hohlzylindrischer Mantel ausgebildet ist,
dass auf einer Stirnseite Lichtsender zur Einstrahlung von Lichtstrahlen in den hohlzylindrischen Mantel des Leuchtrings (10) angeordnet sind und
dass der Mantel des Leuchtringes (10) an seinem dem Gegenstand zugewandten Ende eine Austrittsfläche (12) der Lichtstrahlen besitzt, welche zum Mantel des Gegenstandes derart geneigt ist, dass die Lichtstrahlen auf den Mantel einfallen,
wobei vorzugsweise auf den Umfang der Stirnseite mehrere Lichtsender (11) derart verteilt sind, dass sich durch die Anordnung der Lichtsender (11) eine gewünschte Ausleuchtung der Mantelfläche (3) des Gegenstandes einstellen lässt.

5. Verfahren nach einem der vorangegangenen Ansprüche
**dadurch gekennzeichnet, dass**
der Gegenstand auf einer Glasplatte liegend von unten fotografiert wird,
wobei, vorzugsweise die Aufnahme von oben und unten gleichzeitig und die Bildauswertungen beider Seiten sowie des Mantels in Bezug zu einander gesetzt werden.

6. Verfahren nach einem der vorangegangenen Ansprüche
**dadurch gekennzeichnet, dass**
der Gegenstand bei der fotographischen Aufnahme bewegt oder gefördert und dass bei der fotographischen Aufnahme eine Kurzzeitbelichtung angewandt wird.

7. Verfahren nach Anspruch 1
**gekennzeichnet durch**
einen Spiegel (17) in Form der Innenfläche eines Kegelmantels, welcher den fotografisch darzustellenden Gegenstand umgibt, wobei die Kamera (16) mit ihrem Linsensystem im wesentlichen auf der Kegelachse liegt.

8. Verfahren nach einem der vorangegangenen Ansprüche,
**gekennzeichnet durch**
Anwendung des Verfahrens auf Münzen (5).

9. Verfahren nach einem der Ansprüche 1-7
**gekennzeichnet durch**
Anwendung des Verfahrens auf Tabletten.

10. Verfahren nach Anspruch 9
**gekennzeichnet durch**
Anwendung des Verfahrens auf Tabletten, welche auf einer Palette mit aufgeklebter Klarsichtfolie verpackt und mit der Klarsichtfolie der Kamera (16) zugewandt sind.

11. Verfahren nach einem der vorangegangenen Ansprüche
**gekennzeichnet durch**
Anwendung einer Digitalkamera (CCD-Kamera), wobei vorzugsweise das Linsensystem das Objektiv (7) der Kamera (16) ist.

12. Verfahren nach Anspruch 11
**gekennzeichnet durch**
Auswertung des aufgenommenen Bildes **durch** Vergleich der aufgenommenen Bildpunkte mit den eingespeicherten Bildpunkten eines zuvor fotographisch aufgenommenen Mustergegenstandes derselben Art.

13. Verfahren nach Anspruch 12
**dadurch gekennzeichnet, dass**
der Bildvergleich lediglich auf einer Auswahl von Bildpunkten basiert, insbesondere von auf einer Linie angeordneten Bildpunkten oder von Bildpunkten, welche auf einem Band angeordnet sind, dessen Breite geringer, insbesondere wesentlich geringer als die gleichgerichtete Dimension des Gegenstandes ist.

14. Verfahren nach einem der vorangegangenen Ansprüche
**dadurch gekennzeichnet, dass**
bei der Bildauswertung die Helligkeit der aufgenommenen Bildpunkte ausgewertet wird.

15. Verfahren nach einem der vorangegangenen Ansprüche
**dadurch gekennzeichnet, daß**
das Öffnungsverhältnis des Objektivs (7) als Quotient Brennweite/Durchmesser kleiner ist als 0,5.

16. Verfahren nach einem der vorangegangenen Ansprüche
**dadurch gekennzeichnet, daß** das Objektiv (7) aus einer Serie von Plan-Konvex-Linsen hergestellt ist.

17. Verfahren nach einem der vorangegangenen Ansprüche
**dadurch gekennzeichnet, daß**
zwischen Okular (9) und Objektiv (7) eine Blende angeordnet wird.

18. Verfahren nach einem der vorangegangenen Ansprüche
**gekennzeichnet durch**
einen Spiegel (17) in Form eines Hohlspiegels, welcher unterhalb des fotografisch darzustellenden Gegenstands (5) derart angeordnet ist, daß der Gegenstand (5) im wesentlichen im Brennpunkt des Hohlspiegels und die Kamera (16) mit ihrem Linsensystem im wesentlichen auf der Achse des Hohlspiegels liegt, wobei vorzugsweise der Hohlspiegel die konkave Unterseite einer Glasplatte bildet, auf welcher der Gegenstand liegt.

19. Verfahren nach einem der vorangegangenen Ansprüche
**gekennzeichnet durch**
einen Spiegel (17) in Form der Innenfläche einer Torus-Schale (Ringschale) hat, welche unterhalb des fotografisch darzustellenden Gegenstands (5) derart angeordnet ist, daß der Gegenstand (5) im wesentlichen im Brennpunkt der Schale und die Kamera (16) mit ihrem Linsensystem im wesentlichen auf der Achse der Schale liegt.

## Claims

1. A method for photographically representing a cylinder-shaped, especially plate-shaped object (5), which has a front surface (12) and a circumferential surface (3), by means of a camera oriented towards the front surface (12), **characterized by** the use of a lens system as an objective lens (7) in the focal point of which the front surface (12) is substantially situated, and which is designed in its optical path such as to cause the circumferential surface (3) to be imaged as an annular surface which surrounds the image of the front surface.

2. The method according to claim 1,
**characterized in that**
the lens system, in its diameter, substantially exceeds the largest possible width of the workpiece.

3. The method according to claim 1 or 2,
**characterized by**
the illumination of the object by means of a ring made from transparent material, such as glass or Plexiglass, which surrounds the object and which has a light introduction opening parallel to the cylindrical axis of the object and a cylindrical envelope-shaped or conical envelope-shaped light emergence surface which surrounds the circumferential surface and is substantially oriented towards the circumferential surface.

4. The method according to claim 3,
**characterized in that**
the luminous ring (10) is formed from transparent or translucent material as a hollow cylindrical envelope, **in that** light transmitters are arranged on a front face to radiate light beams into the hollow cylindrical envelope of the luminous ring (10), and **in that** the envelope of the luminous ring (10), at its end facing the object, has an emergence surface (12) for the light beams, which is inclined towards the envelope of the object such that the light beams are incident onto the envelope, wherein a plurality of light transmitters (11) preferably are distributed on the circumference of the front face in such a way that the arrangement of the light transmitters (11) allows to set a desired illumination of the circumferential surface (3) of the object.

5. The method according to any one of the preceding claims,
**characterized in that**
the object lying on the glass plate is photographed from below, wherein the picture preferably is set simultaneously from above and below and the image evaluations of the two faces and that of the envelope are set into relation to each other.

6. The method according to any one of the preceding claims,
**characterized in that**
the object is moved or conveyed during the photographic pick-up and **in that** high-speed exposure is used during the photographic pick-up.

7. The method according to claim 1,
**characterized by**
a mirror (17) in the form of the inner face of a conical envelope which surrounds the object to be photographically represented, the camera (16) with its lens system being positioned substantially on the conical axis.

8. The method according to any one of the preceding claims,
**characterized by**
the application of the method to coins (5).

9. The method according to any one of claims 1 - 7,
**characterized by**
the application of the method to tablets.

10. The method according to claim 9,
**characterized by**
the application of the method to tablets which are packaged on a pallet with a transparent film pasted thereon and with the transparent film facing the camera (16).

11. The method according to any one of the preceding claims,
**characterized by**
the application of a digital camera (CCD camera) wherein the lens system preferably is the objective lens (7) of the camera (16).

12. The method according to claim 11,
**characterized by**
the evaluation of the picked-up image by a comparison of the pixels recorded to the pixels stored of a reference object which was picked up photographically before.

13. The method according to claim 12,
**characterized in that**
the comparison of images is merely based on a selection of pixels, specifically pixels arranged in a line or pixels which are arranged on a strip the width of which is smaller, particularly substantially smaller, than the equally directed dimension of the object.

14. The method according to any one of the preceding claims,
**characterized in that** the brightness of the recorded pixels is evaluated during an evaluation of images.

15. The method according to any one of the preceding claims,
**characterized in that** the aperture ratio of the objective lens (7), as a focal length/diameter quotient, is less than 0.5.

16. The method according to any one of the preceding claims,
**characterized in that** the objective lens (7) is manufactured from a series of plano-convex lenses.

17. The method according to any one of the preceding claims,
**characterized in that** a diaphragm is arranged between the eyepiece (9) and objective lens (7).

18. The method according to any one of the preceding claims,
**characterized by**
a mirror (17) in the form of a concave mirror which is arranged below the object (5) to be represented photographically in such a way that the object (5) is positioned substantially at the focal point of the concave mirror and the camera (16) with its lens system is positioned substantially on the axis of the concave mirror, wherein the concave mirror preferably forms the concave lower, face of a glass plate on which the object is placed.

19. The method according to any one of the preceding claims,
**characterized by** a mirror (17) in the form of the inner face of a torus shell (annular shell) which is arranged below the object (5) to be represented photographically in such a way that the object (5) is positioned substantially at the focal point of the shell and the camera (16) with its lens system is positioned substantially on the axis of the shell.

## Revendications

1. Procédé pour la représentation photographique d'un objet cylindrique (5), en particulier en forme de disque, lequel possède une surface frontale (12) et une surface enveloppe (3), au moyen d'une caméra (6) dirigée sur la surface frontale (12), **caractérisé par** l'utilisation d'un système de lentille comme objectif (7), la surface frontale (12) étant disposée essentiellement dans le foyer de celui-ci, et lequel est conçu avec sa trajectoire de faisceau de sorte que la surface enveloppe (3) se reproduise comme surface annulaire qui entoure l'image de la surface frontale.

2. Procédé selon la revendication 1, **caractérisé en ce que** le système de lentille dépasse essentiellement dans son diamètre la plus grande largeur possible de la pièce à oeuvrer.

3. Procédé selon l'une ou l'autre des revendications 1 et 2, **caractérisé par** l'éclairage de l'objet au moyen d'un anneau en matériau hyalin comme du verre ou du plexiglas, lequel entoure l'objet, lequel a une introduction de la lumière parallèlement à l'axe de cylindre de l'objet et une surface de sortie de lumière en forme d'enveloppe de cylindre ou d'enveloppe de cône, laquelle entoure la surface enveloppe et laquelle est dirigée sensiblement sur la surface enveloppe.

4. Procédé selon la revendication 3, **caractérisé en ce que** :
- l'anneau lumineux (10) en matériau hyalin ou transparent est réalisé comme enveloppe cylindrique creuse ;
- des émetteurs de lumière sont agencés sur une face frontale pour l'incidence de rayons lumineux dans l'enveloppe cylindrique creuse de l'anneau lumineux (10) ; et
- l'enveloppe de l'anneau lumineux (10) possède sur son extrémité tournée vers l'objet une surface de sortie (12) des rayons lumineux, laquelle est inclinée vers l'enveloppe de l'objet de sorte que les rayons lumineux tombent sur l'enveloppe,
dans lequel plusieurs émetteurs de lumière (11) sont répartis de préférence sur la périphérie de la face frontale de sorte qu'il est possible d'ajuster un éclairage désiré de la surface enveloppe (3) de l'objet par l'agencement des émetteurs de lumière (11).

5. Procédé selon l'une des revendications précédentes, **caractérisé en ce que** l'objet est photographié par le bas en état placé sur une plaque en verre, opération pendant laquelle, de préférence, la prise de vue depuis le haut et le bas et simultanément les évaluations d'image des deux faces ainsi que de l'enveloppe sont positionnées en référence réciproque.

6. Procédé selon l'une des revendications précédentes, **caractérisé en ce que** l'objet est déplacé ou transporté pendant la prise de vue photographique et **en ce qu'**une exposition de courte durée est appliquée pendant la prise de vue photographique.

7. Procédé selon la revendication 1, **caractérisé par** un miroir (17) ayant la forme de la surface intérieure d'une enveloppe de cône, lequel entoure l'objet devant être représenté photographiquement, dans lequel la caméra (16) se trouve sensiblement sur l'axe de cône avec son système de lentille.

8. Procédé selon l'une des revendications précédentes, **caractérisé par** l'application du procédé sur des pièces de monnaie (5).

9. Procédé selon l'une des revendications 1 à 7, **caractérisé par** l'application du procédé sur des cachets.

10. Procédé selon la revendication 9, **caractérisé par** l'application du procédé sur des cachets qui sont emballés sur une palette avec un film transparent collé et qui sont tournés vers la caméra (16) avec le film transparent.

11. Procédé selon l'une des revendications précédentes, **caractérisé par** l'utilisation d'une caméra numérique (caméra CCD), le système de lentilles étant de préférence l'objectif (7) de la caméra (16).

12. Procédé selon la revendication 11, **caractérisé par** l'évaluation de l'image enregistrée par la comparaison des pixels enregistrés aux pixels mémorisés d'un objet échantillon du même type, enregistré au préalable photographiquement.

13. Procédé selon la revendication 12, **caractérisé en ce que** la comparaison des images se base seulement sur une sélection de pixels, en particulier de pixels agencés sur une ligne ou de pixels agencés sur une bande dont la largeur est plus faible, en particulier sensiblement plus faible, que la dimension dans le même sens de l'objet.

14. Procédé selon l'une des revendications précédentes, **caractérisé en ce que** la clarté des pixels enregistrés est évaluée pendant l'évaluation d'images.

15. Procédé selon l'une des revendications précédentes, **caractérisé en ce que** le rapport d'ouverture de l'objectif (7), en tant que quotient distance focale/diamètre, est inférieur à 0,5.

16. Procédé selon l'une des revendications précédentes, **caractérisé en ce que** l'objectif (7) est fabriqué à partir d'une série de lentilles planes et convexes.

17. Procédé selon l'une des revendications précédentes, **caractérisé en ce qu'**un diaphragme est agencé entre l'oculaire (9) et l'objectif (7).

18. Procédé selon l'une des revendications précédentes, **caractérisé par** un miroir (17) ayant la forme d'un miroir creux qui est agencé sous l'objet (5) devant être représenté photographiquement de sorte que l'objet (5) se trouve sensiblement dans le foyer du miroir creux et que la caméra (16) se trouve sensiblement sur l'axe du miroir creux avec son système de lentille, le miroir creux formant de préférence la face inférieure concave d'une plaque en verre sur laquelle est placé l'objet.

19. Procédé selon l'une des revendications précédentes, **caractérisé par** un miroir (17) ayant la forme de la surface intérieure d'une coque torique (coque annulaire), laquelle est agencée sous l'objet (5) devant être représenté photographiquement de sorte que l'objet (5) se trouve sensiblement dans le foyer de la coque et que la caméra (16) se trouve sensiblement sur l'axe de la coque avec son système de lentille.
